# EUROPEAN PATENT SPECIFICATION

(11) **EP 2 681 819 B1**
(45) Date of publication and mention of the grant of the patent: **04.11.2015**
(21) Application number: 12704315.6
(22) Date of filing: 01.02.2012
(51) Int. Cl.: H02G 3/08

(54) **A FINGER PRESSED SPECIAL KNOCK OUT**
SPEZIELLE DURCH FINGERDRUCK AUSBRECHBARE DRÜCKPLATTE
OUVERTURE SPÉCIALE DÉFONÇABLE PAR UN DOIGT

(30) Priority: 01.02.2011 AU 2011900300
(43) Date of publication of application: 08.01.2014
(73) Proprietor: Elsteel Denmark A/S, 3000 Helsingør (DK)
(72) Inventor: LOGSTRUP, Erik, Katunayake 11420 (LK)
(86) International application number: PCT/IB2012/050467
(87) International publication number: WO 2012/104797

(56) References cited:
- JP-A- 59 206 122
- JP-U- H0 560 615
- US-A- 1 709 187
- US-A- 1 850 165

## Description

### THE TECHNICAL FIELD.

The present invention relates to a easy to use finger pressed special knock out used for the purpose creating access holes or cavities.

### BACKGROUND ART

Knock outs are being used in various forms for various types of applications such as covers of electrical appliances and in separation plates of electrical panels and almost all of them have been always rigidly attached to the plated on which they are situated using micro joints to hold them in place.

Document US1709187A describes a knock out which is formed as a depression of generally circular shape in the wall of a switch box. The knock out is separated from the sheet of material along its circumference appart from one intact portion which acts as hinge and which may be readily broken of when the knockout is being removed. Opposite of the hinge portion there is a bent edge portion which permits engagement of a screw driver. Document JPH0560615U shows a generally circular knock out with two hinge portions formed on opposite sides of the circumference. Document US1850165A shows a knock out structure formed in the wall of a switch box with two parts of the knock out displaced in opposite directions from the wall plane.

The knock out designs which have been in existence for the purpose of creating access holes have so far been unable to make the removal of the joint easy and have often needed the use of heavy tools and huge effort to remove the knock out safely without distorting or harming the plate on which the knock out is situated.

Even the best models have had to avail the use of tools and high physical force for removal thereby making the process time consuming tedious and in some cases unsafe while solutions such as thinner plating for separation plates have resulted in reduced strength and inconveniences.

### DISCLOSURE OF THE INVENTION.

The problems of the prior art are solved by the special knock out defined in independent claim 1.

The special finger pressed knock out is an impression which consists of two levels one above and one below the level of the sheet of material it is situated and intended to create an opening on and can be easily removed by pushing on the larger depressed portion of the knockout which will lie below the level of the sheet of material on which the knock lies.

The continuous pressure applied on the larger depressed portion of the knockout will make the knock out pivot around the two points at which is connected to the sheet of material on which is situated on revolving with the line connecting the two joints which attach the knock out to the sheet on which it lies being the axis of rotation which will always be slightly offset from the diameter of the knock and the access hole.

Continuous pressure will rotate the disk shaped knock out even further eventually break the micro joints thereby detaching it completely from the sheet on which it was impressed initially resulting in smooth hassle free removal of the knock out with the main advantage being the slightly offset joints helping unstuck removal as opposed to the knock out being attached to two points on its diameter.

### INTRODUCTION TO DRAWINGS

An example of the invention will be described by referring to the accompanying drawings.
FIG.1.Front view (outside) of the knock out in its complete form before removal attached to sheet of material.
FIG.2. Back view (inside) of the knock out in its complete form before removal attached to the sheet of material.
FIG.3.Bottom view of the finger pressed special knock out.
FIG.4.A Perspective view of the knock out in its initial state.
FIG.5.A Perspective view of the knock out in its initial state from an opposing angle.
FIG.6.A Perspective view of the knock out in its initial state from an upward angle.
FIG.7.The knock out being rotated for removal.

### DESCRIPTION OF EXEMPLARY EMBODIMENT.

In the drawings each essential view and component of the finger pressed special knock out (1) has been illustrated for comprehending purposes.

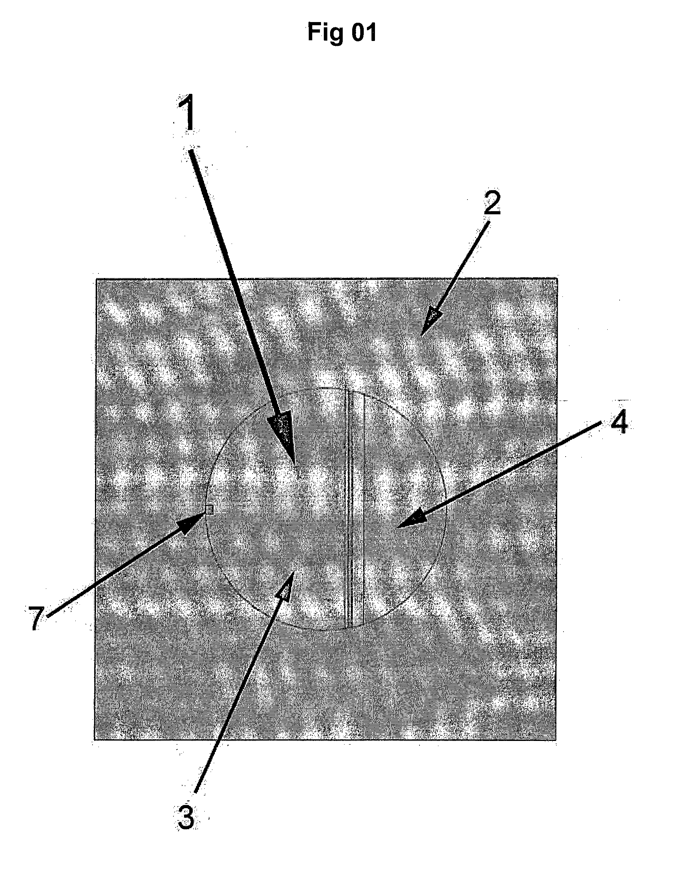

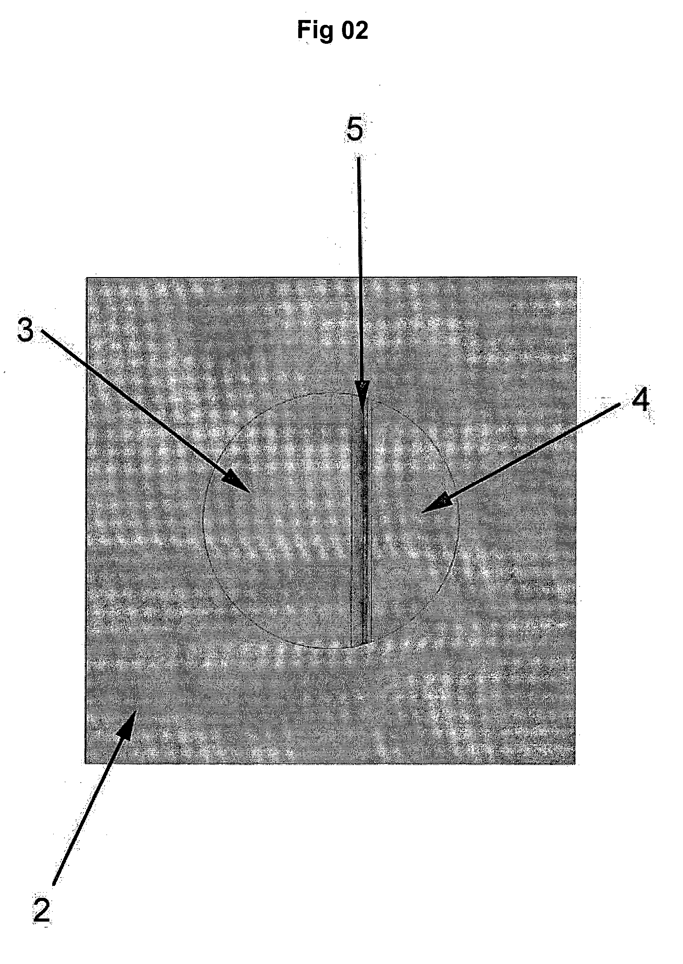

FIG.1 and FIG.2 depict the knock out (1) which is made by sheering the sheet of material (2) from both front and back views where FIG.1 shows the exact view that a user may see when handling the finger pressed special knock out (1) where a depressed portion (3) and a bulging portion (4) along with a stopper (7) which restricts the knock out (1) from revolving out wards and towards the user has been depicted whereas FIG.2 depicts the reverse view of the knock out (1) from an inside to outside point of view.

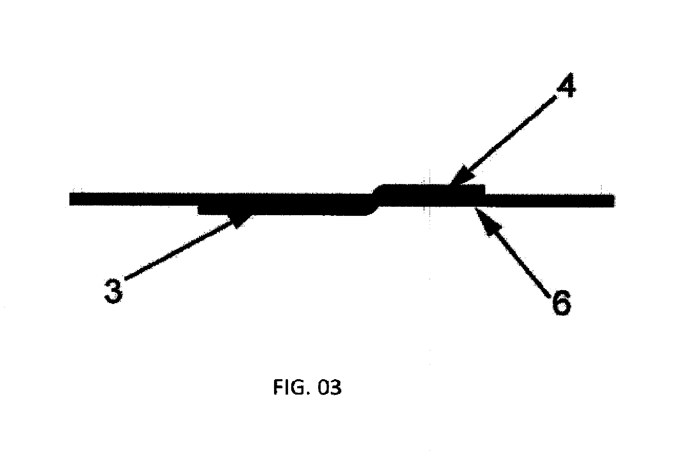

Referring to FIG.3.we can notice the three levels created by the sheering mechanism used to create the finger pressed special knock out (1) where the larger portion (3) is depression to a level below the level of the sheet of material (2) on which the knock out (1) is situated on while the remaining portion (4) is a bulge risen above the level of the sheet of material (2), thus creating three levels of equal thickness on the sheet.

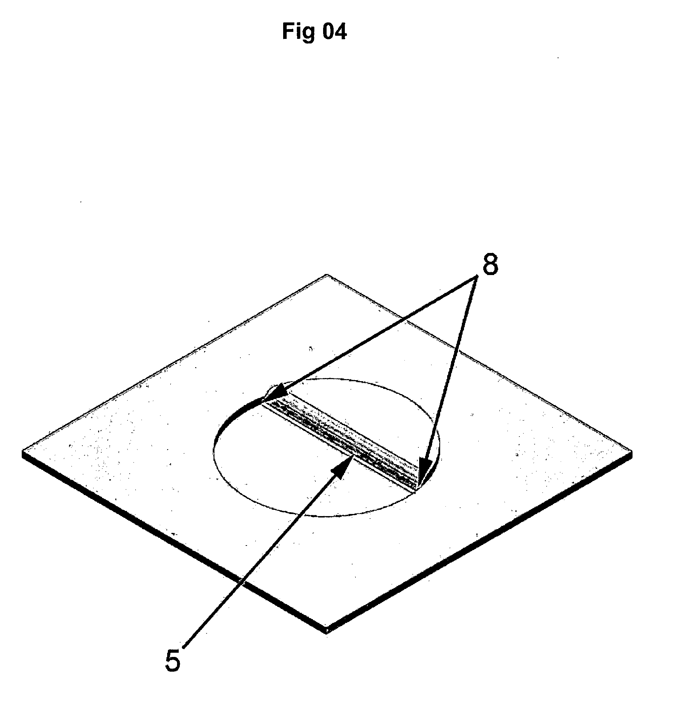

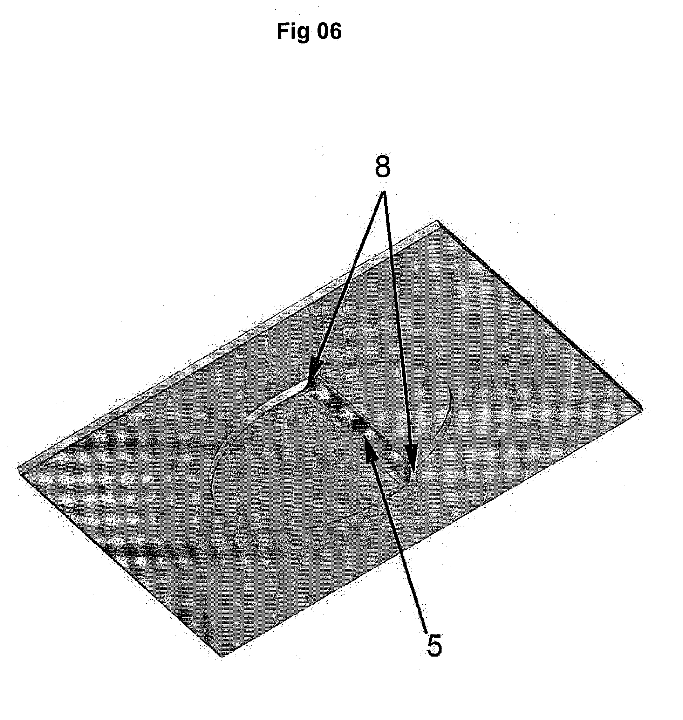

FIG.4 and FIG.6 are perspective views of the finger pressed special knock out (1) where indications towards the step (5) which defines and separates the depression (3) and bulge (4) on the knock out (1) itself have been indicated while also making clear the points which are connecting the knock out (1) to the sheet on which it is situated and are situated slightly towards the side of the diameter of the knock out (1) in order to get the desired effect of unhinged and unstuck free smooth removal of the knock out (1) from the access hole it creates.

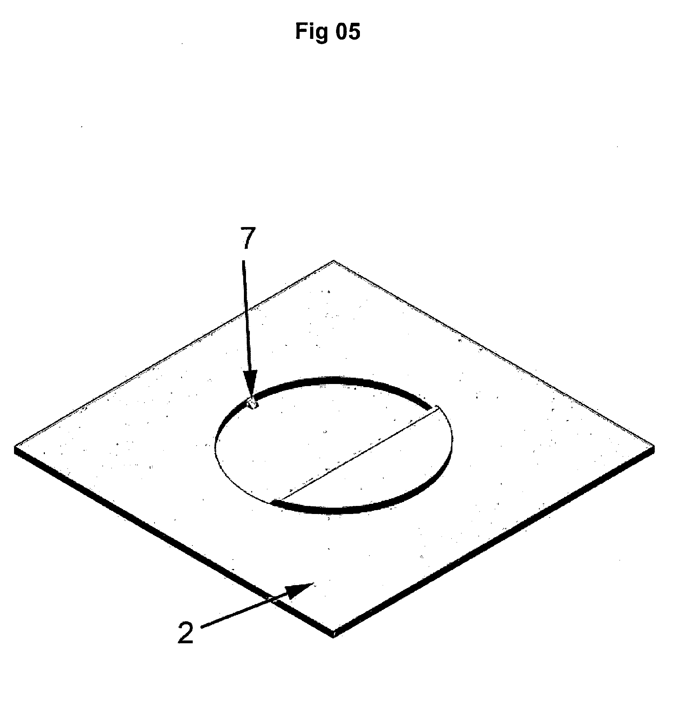

FIG.5.a perspective view of the knock out (1) clearly depicts the stopper (7) that restricts the finger pressed special knock out (1) from rotating outwards towards the user while the figure also clearly indicates the three levels that depression (3), the bulge (4) and the sheet (2) on which the knock out (1) lies occupy. Here the stopper (7) is employed to reduce the risk of unintentional removal of the knock out (1) due to the ultimate ease with which it can be done.

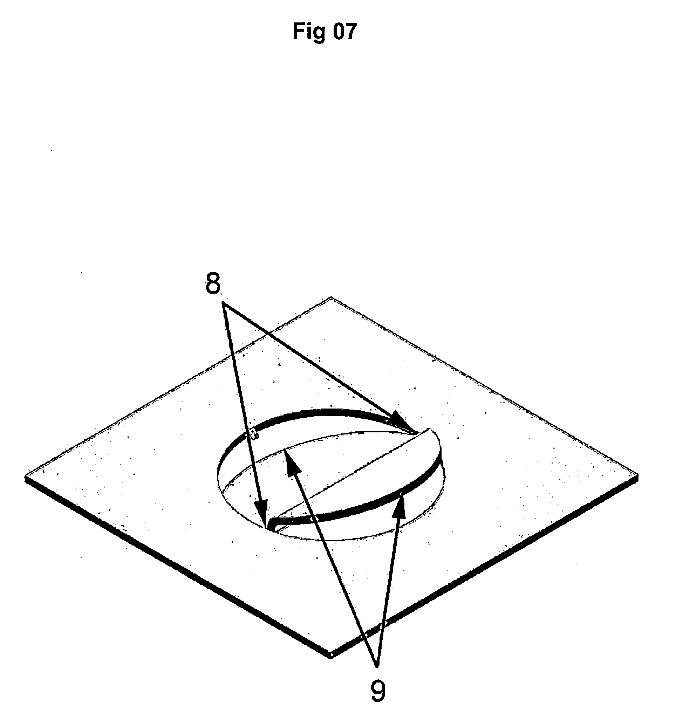

Referring to FIG.7.we can clearly see the rotation of the knock out (1) and this also gives an illustration of the joints (8) on which the knock out (1) pivots and rotates when pressure is applied to the larger portion (3) of the knock out (1) rotating in inwards and away from the user while the figure also reveals the disjointed edges along the circumference (9) of the knockout which are caused by the shearing mechanism employed to create the knock out (1) which is an inherent part of the design.

### INDUSTRIAL APPLICABILITY.

This invention carries huge potential in the spheres of electrical enclosure and vertical separation plates where this finger pressed special knock out can present itself as a time saving, safer and more efficient way of creating access cut outs for wiring and cabling purposes and other benefits that maybe accrued thereof.

## Claims

1. A special knock out (1) which comprises a generally circular impression with diameter M on a sheet of material (2) which may form a part of a steel separation plate or other material and when removed it creates access cutouts or openings in the specific material and comprising a) two uneven portions separated by a step (5) on the surface of the knock out (1) where the larger portion (3) is a depression (3) on the sheet of material (2) on which the knock out (1) is situated on while the remaining portion is a bulge (4) on the surface on which the knock out (1) is situated; wherein b) the knock out is disjoint from the surface it is situated on along its circumference (9) except for two points forming joints (8) which when connected in a straight line form a line parallel to the step (5) on the surface of the knock out (1); and c) generally the larger portion (3) of the knock out (1) forms the depression (3) on the surface of the material the knock out (1) is situated on and this portion is blocked from revolving outwards into the sheet of material (2) by a small stopper (7) situated on the circumference (9) of the access cut outand the knock out (1) is finger pressed removable by pushing the larger portion(3) of the knock out(1) inwards away from the sheet of material (2).

2. Special knock out in accordance with claim 1 wherein the two joints (8) connecting the knock out (1) to the sheet of material (2) it is situated on are placed in such a way that the straight line connecting the two joints (8) has a length equal to the length of the step (5) or a length less than the diameter M of the knock out (1) or the access hole itself and when the larger portion (3) of the knock out (1) is pushed inwards the knock out (1) revolves pivoting on these two joints (8) until the joints (8) breaks free to expose the access hole.

3. Special knock out in accordance with claim 1 and 2 wherein the straight line created by the step (5) is of a length either less than or equal to the diameter M of the knock out (1).

4. Special knock out in accordance with claim 1 wherein the diameter M may vary according to the situation and requirement at hand.

5. Use of the special knock out (1) in accordance with any of claims 1 - 4 for the purpose of creating access holes or cavities.

## Patentansprüche

1. Eine spezielle Knockout (1), besteht aus einem allgemeinen Rundschreiben Eindruck mit einem Durchmesser von M auf einem Blatt des Materials (2), bilden können Teil eines Stahl Trennplatte oder anderes Material und entfernt, wenn es schafft Zugang Ausschnitte oder Öffnungen in der spezifischen materiellen und bestehend aus a) zwei ungleiche Teile getrennt durch einen Schritt (5) auf der Oberfläche der Knock-out (1), wo der größere Teil (3) ist eine Depression (3) auf dem Blatt des Materials (2), auf denen die knock out (1), während der verbleibende Teil ist eine Ausbauchung (4) auf der Fläche, auf der die knock out (1) gelegen ist; wobei b) Die knock out ist dijunkt von der Oberfläche, wo es liegt und auf seinen Umfang (9) mit Ausnahme von zwei Punkte bilden Gelenke (8), was wenn eine Verbindung in einer geraden Linie bilden eine Linie parallel zu den Schritt (5) auf der Oberfläche der Knock-out (1); und c) in der Regel den größeren Teil (3) des knock out (1) Formen der Depression (3) auf der Oberfläche des Materials die knock out (1) befindet sich auf und dieser Anteil ist blockiert aus revolvierenden nach außen in das Blatt Material (2) durch einen kleinen Stopper (7) befindet sich am Umfang (9) der Zugriff Ausschnitt auf und die knock out (1) Finger gedrückt abnehmbare durch Drücken der größere Teil (3) des knock out (1) nach innen weg vom Materialblatt (2).

2. Spezielle knock out in Übereinstimmung mit Anspruch 1, worin die zwei Gelenke (8) Anschließen des knock out (1) das Blatt des Materials (2) wo es platziert wird werden, so dass der geraden Verbindungslinie zwischen den zwei Gelenke (8) hat eine Länge gleich der Länge der Schritt (5) oder einer Länge von weniger als der Durchmesser M der Knock-out (1) oder die Zugangsöffnung selbst und den grösseren Teil (3) des knock out (1) Ist nach innen gedrückt Die knock out (1) dreht sich drehen auf diese beiden Gelenke (8), bis die Gelenke (8) bricht aus frei zum aussetzen die Zugangsöffnung.

3. Spezielle knock out in Übereinstimmung mit Anspruch 1 und 2, wobei die gerade Linie, die erstellt von Stufe (5) eine Länge entweder kleiner oder gleich dem Durchmesser M des Knock-out (1).

4. Spezielle knock out in Übereinstimmung mit Anspruch 1, wobei der Durchmesser M kann je nach Situation und Anforderung zur Hand zu variieren.

5. Verwendung des spezielle knock out (1) in Übereinstimmung mit einem der Ansprüche 1-4 für die Zwecke der Erstellung von Zugangslöcher oder Hohlräume

## Revendications

1. Un knock out spéciale (1) qui comprend une impression généralement circulaire avec un diamètre M sur une feuille de matériau (2) qui peut former une partie d'une plaque de séparation en acier ou autre matériau et quand elle est retirée il crée l'accès des découpes ou ouvertures dans le matériau spécifique et comprenant a) deux parties inégales séparés par une étape (5) sur la surface de la knock out (1) où la plus grande partie (3) est une dépression (3) sur la feuille de matériau (2) sur laquelle le knock out (1) est situé sur tandis que le reste est un renflement (4) sur la surface sur laquelle le knock out (1) est situé; dans lequel b) le knock out est disjoint de la surface qui il est situé le long de sa circonférence (9) à l'exception de deux points formant les articulations (8) qui lorsqu'il est connecté à une ligne droite forment une ligne parallèle à l'étape (5) sur la surface de le knock out (1); et c) d'une façon générale, la plus grande partie (3) de l'knock out (1) formulaires de la dépression (3) sur la surface du matériau qui le knock out (1) est situé sur, et cette partie est bloqué à partir renouvelable de l'extérieur dans le feuille de matériau (2) par un petit bouchon (7) situé sur la circonférence (9) de l'accès découper et le knock out (1) est doigt appuyé amovible en poussant la portion la plus grande partie (3) de l'knock out (1) vers l'intérieur à l'écart de la feuille de matériau (2).

2. Knock out spécial conformément à la revendication 1, où les deux joints (8) reliant le knock out (1) de la feuille de matériau (2) où il est situé sur sont placées de telle sorte que la ligne droite reliant les deux joints (8) a une longueur égale à la longueur de l'étape (5) ou une longueur inférieure au diamètre M de l'knock out (1) ou le trou d'accès lui-même et lorsque la plus grande partie (3) de l'knock out (1) est poussé vers l'intérieur le knock out (1) tourne en pivotant sur ces deux joints (8) jusqu'à ce que les articulations (8) pauses libre de dénoncer le trou d'accès.

3. Knock out spécial conformément à la revendication 1 et 2 où la ligne droite créé par l'étape (5) est d'une longueur inférieure ou égale au diamètre M de l'knock out (1).

4. Knock out spécial conformément à la revendication 1 dans laquelle le diamètre M peuvent varier selon la situation et exigence à portée de main.

5. Utilisation de l'knock out spécial (1) en conformité avec l'une quelconque des revendications 1 à 4 dans le but de créer des trous d'accès ou des cavités.
